# EUROPEAN PATENT SPECIFICATION

(11) **EP 2 776 371 B1**
(45) Date of publication and mention of the grant of the patent: **19.09.2018**
(21) Application number: 12784233.4
(22) Date of filing: 05.11.2012
(51) Int. Cl.: C02F 9/00, C02F 1/00, C02F 1/78, C02F 1/28, C02F 1/36, C02F 101/20, C02F 1/32, C02F 103/06

(54) **PURIFICATION OF LANDFILL LEACHATE WASTEWATER BY ACTIVE CHARCOAL AND PHOTO - OZONOLYSIS**
KLÄRUNG VON DEPONIESICKERWASSER ABWÄSSER DURCH AKTIVHOLZKOHLE UND PHOTOOZONOLYSE
PURIFICATION D'EAUX USÉES DE LESSIVATS DE DÉCHARGES PAR LE BIAIS DE CHARBON ACTIF ET DE PHOTO-OZONOLYSE

(30) Priority: 08.11.2011 IT RM20110585
(43) Date of publication of application: 17.09.2014
(73) Proprietor: Arescosmo S.p.A., 04011 Aprilia, (LT) (IT)
(72) Inventor: CATALDO, Franco, 00133 Rome (IT)
(74) Representative: Santi, Filippo
(86) International application number: PCT/EP2012/071794
(87) International publication number: WO 2013/068308

(56) References cited:
- WO-A1-95/21794
- WO-A2-2006/116533

## Description

It is described a process suitable for the purification of landfill leachate and for transforming it from special waste into water that can be discharged in accordance with the law into a public sewage or, even better, that can be discharged into superficial waters or onto the soil. The process consists in a photo-ozonolysis of the leachate previously treated with activated charcoal. By means of this process it is possible to remove the transition metals present in the leachate and to reduce the COD (Chemical Oxygen Demand) within the limits established by the Italian law n. 152/06.

### Background art

One of the main chemical problems of municipal solid waste landfills concerns the collection and, in particular, the disposal of the leachate. The landfill leachate is the result of the percolation of rainwater through the municipal solid wastes buried together with soil in the landfill. The rainwater penetrates into the mass of waste washing away and gradually extracting all the soluble substances that are derived from the decomposition of the waste itself, also causing a gradual corrosion with the subsequent aqueous-phase extraction of metal objects possibly present in the landfill. The "mature" landfill leachate consists of a dark and evil-smelling liquid, very often containing organic solids in suspension. A "mature" leachate is defined as a leachate that has undergone the first fermentation step of the organic phase and has, consequently, been made basic in pH (pH values in between 7.7 and 9.5) and is dark in color, while a young leachate usually is acidic, yellow, cloudy, with a very sharp smell, and with a COD = Chemical Oxygen Demand very much higher than that of a mature leachate. The fermentation uses part of the organic matter present in the young leachate releasing CO₂, while a mature leachate not only has a much lower COD than the young one, but also has started methanogenic fermentation processes with a production of methane. In the cultivation of a landfill, areas can be distinguished that are completely filled with waste and that are left to ripen, possibly for a few years, and that actually release mature leachate.

There are also newly realized areas that sometimes are still in the filling stage of waste or where the accumulation of waste has been completed recently. These areas are characterized by the production of a young leachate. Usually, in the average modern landfills there are installed systems which allow the circulation and collection of the leachate coming from the entire landfill so that the young leachate is mixed with the mature one that is most abundant, in order to obtain an average leachate that is the result of different leachates types released in different landfill areas. Such an average leachate is then stored in appropriate silos before being disposed in specific centers specialized in the final leachate removal, for example by water evaporation, to produce troublesome sludges.

It is the current practice not to purify the leachate at the landfill site but, as said, it is transported in equipped centers, often located far away from the landfill site, where it is treated producing troublesome sludges. The aim of the present invention is, on the contrary, to propose a new process for the purification of the landfill leachate directly at the landfill site without the production of sludges, avoiding the transportation of the leachate far away from the landfill for its final treatment, consequently eliminating all the transportation and treatment costs. Indeed, the new process can be applied directly at the landfill site transforming the landfill leachate into purified water which can be discharged into the sewage or in a wet pond or even in dry soil according to the law limits.

A typical conventional treatment of the landfill leachate involves its passage through a fixed bed of activated charcoal or charcoal which is able to reduce considerably its initial COD as well as its relatively high content of transition metals. Furthermore with the passage through activated charcoal or charcoal the landfill leachate color turns from brown to water white and its terrible smell is largely suppressed.

The activated charcoal or charcoal consists of amorphous charcoal having a high surface area (1000-2000 m²/g) which purifies the leachate by absorbing the humic and fulvic substances present in the leachate. The activated charcoal once saturated from humic and fulvic substances can be re-activated by a thermal treatment under controlled atmosphere and used over for several times as the purifying agent of the leachate (cfr. P.N. Cheremisinoff, F. Ellerbucsh, Charcoal Adsorption Handbook, Ann Arbor Science, 1980). However, the landfill leachate treatment with activated charcoal even though from one side is effective in reducing drastically the COD and in removing the transition metals, it is not effective in purifying the leachate water to a sufficient level that is within the law limits for discharging into the sewage or in a wet pond or even in dry soil.

Therefore, to complete the leachate treatment with activated charcoal, it is necessary to add an additional chemical step in order to refine the purification process and bring the purified water into the law limits for the discharge into the sewage or in a wet pond or even in dry soil. One of the most promising oxidizing agent for the post-treatment of the leachate after the passage through the activated charcoal is ozone. Ozone is also enviromentally safe and it is not only an oxidizing agent but it is also a sterilizing agent which is not persistent in water as in the case of chlorine, and does not produce dangerous organochlorinated compounds form the decomposition of the organic substances present in water. Thus, it is possible to say here that ozone is the best oxidizing and sterilizing agent among all the possible oxidants and sterilants (cfr. B. Langlais et al. Ozone in Water Treatment Application and Engineering, Lewis Publishers, Boca Raton, 1991). However, even ozone, if used alone is not able to reduce sufficiently the COD (in order to stay within the law limits) of the purified water obtained from the leachate passed through an activated charcoal bed.

In the art are known different processes for the treatment of landfill leachate, polluted waters and wastewaters of any type. However none of these processes allows obtaining satisfactory results. The patent application WO 95/21794 reports a process for the treatment of wastewaters (but not landfill leachate) where the action of ozone or UV irradiation are conducted on a fluidized bed of adsorbing material (activated charcoal, alumina) already saturated with the wastewater under treatment. In the patent WO 95/21794 the treatment of wastewater is described but not of the landfill leachate. The wastewater is radically different from the landfill leachate both in terms of COD (which is considerably higher in the leachate) and in terms of transition metals content (again considerably higher in the case of the landfill leachate). Furthermore, the process described in WO 95/21794 is based on the formation of a fluidized bed constituted by the wastewater to be treated adsorbed, for example, onto activated charcoal. On this fluidized bed the oxidizing agent is introduced. However, the treatments with the oxidizing agent and/or with the UV radiation are not performed on the eluate but directly on the mixture wastewater and sorbent. In these conditions the wastewater purification process results scarcely effective and expensive since part of the ozone employed is consumed in the oxidation of the activated charcoal surface and the UV radiation is not effective at all since the mixture wastewater/sorbent is turbid and dark. Also the patent application EP 0625428 describes a process for the treatment of the wastewater where it is used the activated charcoal as adsorbent, however the oxidation of the pollutants is performed on the surface of the sorbent and the simultaneous action of ozone and UV light is never reported. Instead the action of UV light is used as a means to destroy the excess of ozone in the water. US patent application 2003/019150 proposes a continuous process where the wastewater is sequentially treated first with a sorbent, then with ozone and finally with UV light. In these conditions the simultaneous application of ozone and UV never occur and the contact time between ozone and the wastewater are too short to be effective (of the order of few seconds rather than hours as reported in the present invention). A patent claiming the use of ozone and UV radiation is US 6210078. However, such a patent focuses on the purification of polluted soils and does not deal either with wastewater treatment nor with landfill leachate treatment. Indeed US Patent 6120078 covers the use of chelating agents for the removal of pollutants from the soil such as heavy metals ions. The use of ozone and UV radiation is contemplated as a mean to destroy the complex formed between the organic chelating agent and the heavy metals ions. In any case, are not described neither the adoption of sorbents, nor the photo-ozonolysis conditions (simultaneous application of UV light and saturated ozone concentrations) are ever reached.

### Summary of the Invention

It has now been found. and it is the object of the present invention, that photo-ozonolyisis, which is the combined and simultaneous action of ozone and UV radiation to a landfill leachate, is a new technique effective in reducing drastically the COD of heavy polluted waters bringing the COD level down to what is required by law regulations. It has been also found, and is part of the present invention, that ultrasound treatment of the landfill leachate combined with photo-ozonolysis leads to additional advantages in terms of COD abatement efficiency and in the coagulation of the microparticles dispersed into the landfill leachate. Additional objects of the invention will be evident from the following detailed description.

### Detailed Description of the Invention

According to the present invention, by photo-ozonolysis it is meant the combined and simultaneous action of ozone and UV radiation on the landfill leachate wastewater.

The photo-ozonolysis, according to the present invention, is performed on a wastewater that is passed firstly through an activated charcoal fixed bed and then is saturated with ozone and irradiated with UV light. The solution is steadily saturated with ozone during the UV irradiation since ozone is continuously bubbled into the solution under UV irradiation. The combined action of ozone and UV radiation is carried out in the absence of any activated charcoal which has negative effects on the consumption of ozone (excessive consumption) and makes irradiation ineffective by means of the absorption of UV light by the charcoal particles.

Thus, the reaction process claimed by the present patent and which is applied to landfill leachate wastewater, includes the following steps:
- Taking a certain amount of landfill leachate wastewater and mixing it with activated charcoal or charcoal at room temperature, preferably passing the landfill leachate wastewater through a fixed bed of activated charcoal;
- At the exit of the activated charcoal fixed bed, filtration could or could not be required, depending from the physical form of the activated charcoal (powder or granules).
- Performing the photo-ozonolysis process on the eluate recovered at the exit of the activated charcoal or charcoal fixed bed by combining the action of ozone and UV irradiation. In these reaction conditions, the ozone concentration in the wastewater under treatment is maintained to saturation levels since it is bubbled continuously through the solution. The ozone dissolved in solution will be consumed by the reaction with the pollutants and as a consequence of the UV irradiation, while new additional ozone takes the place of the consumed ozone thanks to the continuous bubbling through the liquid phase.

Depending from the COD levels present in the wastewater, the photo-ozonolysis process can last for a few minutes to hours (for low to very high COD respectively). Consequently, the process can be carried out continuously when the photo-ozonolysis process requires few minutes. However, for heavy polluted wastewaters, the process requiring hours must be conducted batchwise.

In a further version of the process, the wastewater could be pre-treated with ozone before being sent through the fixed bed of activated charcoal or charcoal. This pre-treatment with ozone reduces the COD, enhances the adsorption of the ozonized pollutants onto the activated charcoal surface and enhances the durability of the activated charcoal fixed bed. In summary, the landfill leachate wastewater is first pre-ozonized, is then passed through the fixed bed of activated charcoal and the eluate is subjected to photo-ozonolysis as previously discussed.

The UV light is preferably and most commonly produced by vapour mercury lamps operating at low, medium and high pressure of Hg. The most preferred lamps are those working at low mercury pressure.

Ozone is preferably bubbled in a mixture with oxygen at an ozone concentration comprised between 0.5% and 15% by mol over oxygen and most preferably at concentrations between 2% and 10% mol over oxygen.

The process object of the invention is carried out at the atmosferic pressure but higher pressures can be employed comprised between 1 and 20 atm.

The time required to complete the photo-ozonolysis treatment depends from the COD level of the wastewater to be treated, and, as already said above, can require from few minutes up to 8 hours.

The process object of the invention can be further improved by the combined action of ultrasounds. For example, the photo-ozonolysis can be carried out under continuous sonication applying ultrasound transducers on the walls of the reactor or by submerging the reactor inside a industrial ultrasonic bath.

The process object of the invention allows transforming the landfill leachate wastewater from a special and dangerous waste into a purified water which can discharged in accordance with the law into a public sewage or, even better, that can be discharged into superficial waters or onto the soil. The process object of the invention is based on photo-ozonolysis of the landfill leachate wastewater with a pre-treatment with activated charcoal. Consequently the landfill leachate wastewater is first treated with activated charcoal or charcoal in a process already known in the art and the resulting eluate after filtration (if necessary), is treated simultaneously with photolysis and ozonolysis by irradiation of the eluate with UV radiation and bubbling of O₃; thus, the UV photolysis occurs in presence of a saturated solution of ozone. Consequently, the photo-ozonolysis process object of the invention is effective thanks to the combined action of ozone bubbling through the eluate and the simultaneous irradiation with UV light. With such a process it is possible to remove the transition metals present in the eluate and to bring down the COD (Chemical Oxygen Demand) within the law limits established by the Italian law n. 152/06.

Differently from the prior art, the landfill leachate wastewater is first treated with activated charcoal or charcoal and only afterwards, on the eluate coming from the leachate, it is applied the combined treatment of oxidation and irradiation with UV light. Direct treatments with the oxidizing agent and/or with the UV irradiation on the mixture wastewater and activated charcoal and not on the eluate are not effective in the abatement of COD because part of the ozone employed is consumed in the oxidation of the surface of activated charcoal while the UV radiation is fully absorbed by the black sorbent suspended in the wastewater without any positive effect on the wastewater under treatment. Obviously, for the treatment of such heavy polluted and dark wastewaters neither the action of ozone alone, nor the action of UV radiation alone are effective, nor it is the action of ozone and UV radiation used in sequence or viceversa. Even the action of UV only or ozone only on the eluate are not effective on the COD reduction.

The only way to achieve excellent and unique results in term of COD abatement involves the combined action of ozone and UV radiation on a landfill leachate pre-treated with activated charcoal.

The advantages of the process object of the present invention regards the fact that the results in terms of COD abatement are much better than the results achievable through the processes described in the prior art. Moreover, the combination of UV radiation and ozone allows a drastic reduction of the ozone consumption, allowing the new process to be feasible also from the economic point of view.

The following examples are given to illustrate the invention and should not to be considered as limiting its scope.

### Examples 1-5 (comparison)

A chromatographic column with a fritted glass septum at the bottom of the column is filled with 26,0 g of activated charcoal obtained from Sigma Aldrich. (Italy). This activated charcoal is characterized by the fact that is completely free from ashes, as shown by a thermogravimetric analysis in oxygen atmosphere where it was checked the complete absence of ashes. The activated charcoal from Sigma-Aldrich is also characterized by a surface area of 1000 m²/g. The landfill leachate was applied to the top of the activated charcoal column which was 7 cm high. To accelerate the elution of the leachate through the column a slight pressure was applied at the top of the column using a peristaltic compressor. The landfill leachate originally dark brown in colour eluted from the column as clear as water. The results of a series of experiments with the landfill leachate passed through activated charcoal are summarized in Table 1. From the results of Table 1 it is possible to say that a single passage through the activated charcoal column of a landfill leachate of type 1, causes a drop in the COD to 405 mg/L from an initial COD value of 3135 mg/L. This means that the COD was reduced by 87% with respect to the starting value. By using a leachate of type 2 (Example 5), having a higher COD than that of type 1, i.e. 5155 mg/L, the COD reduction per single passage is still around to 87% but the residual COD of 546 mg/L is not in line with the Italian regulations (Decreto Legislativo n. 152/06) for the discharging in a public drain. Example 3 shows that a double passage of the landfill leachate through the activated charcoal bed reduced the COD to 316 mg/L against a starting COD of 3135 mg/L; in this case the COD was reduced by 90%. However, a COD value of 316 mg/L, even though in one hand is within the limits of Italian regulations (Decreto Legislativo n. 152/06) for the discharge in public drain, on the other hand does not reach the limits for the discharge into surface water where the requirement is a COD of 160 mg/L. For this reason it is necessary an additional treatment after that with activated charcoal. Ideally, the new treatment should be able to complete the COD abatement and to sterilize the treated water. Example 3 shows the gradual loss of adsorption activity of the activated charcoal. As expected, the activated charcoal saturates gradually by the continuous passage of the landfill leachate and the purified water emerging from the charcoal bed shows increasing COD values. Also considering this aspect, it is necessary to have an additional treatment of the purified water recovered from the activated charcoal bed. Example 4 shows the limited adsorption efficiency of a non-activated charcoal having a low surface area of 120 m²/g against the 1000 m²/g of the activated charcoal used in all the other examples. It is evident from Example 4 that the COD abatement is totally insufficient and limited to only 28.4% of the initial value.

Activated charcoal is obtained by surface oxidation and also its reactivation is achieved by a partially oxidative thermal treatment (cfr P.N. Cheremisinoff, F. Ellerbucsh, *Op. Cit.*)*.* Therefore, the surface of activated charcoal is characterized by a series of functional groups like for example carboxyl groups and phenol groups which are able to form complexes and salts with transition metal ions. Consequently, activated charcoal is able to remove effectively all the transition metal ions from the aqueous phase eluting through its bed. The two transition metal ions most commonly occurring in a landfill leachate are iron and manganese. The landfill leachate of type 1 has an iron content of 12.6 mg/L and a manganese content of 0.92 mg/L. As shown the example 1, a single elution of the leachate through a fixed bed of activated charcoal reduces the concentration of these two elements to 0.728 and 0.11 mg/L respectively, while a double elution through the activated charcoal lead the concentration of these two elements to 0.239 and 0.04 mg/L respectively. The resulting concentration of iron and manganese are completely in line with the Italian regulation (Decreto Legislativo n. 152/06) which requires 2 mg/L for the iron concentration for the discharge of the purified water in surface waters or in soil and 2 mg/L for the manganese concentration for the discharge in surface waters and 0.2 mg/L for the discharge in the soil.

**Table 1. Landfill leachate purification on activated charcoal (Examples 1-5)**

| | | Example 1 | Example 2 | Example 3 | Example 4 | | Example 5 |
|---|---|---|---|---|---|---|---|
| Exp. N° | Pristine Landfill Leachate type 1 (139-37) | (140-37 B) | (140-37 C) | (140-37 E) | (151-37) | Pristine Landfill Leachate type 2 (157-37) | (157-37) |
| | | Activated Charcoal Aldrich 1000 m²/g | Activated Charcoal Aldrich 1000 m²/g (*) | Activated Charcoal Aldrich 1000 mq/g semi-saturated | Charcoal Black Low surface area 120 m²/g | | Activated Charcoal Aldrich 1000 m²/g |
| pH | 7.7 | 8.5 | 8.2 | | | 8.5 | 8.5 |
| Conductivity (microS/cm) | **7450** | 8450 | 8710 | | | **9050** | 9050 |
| Fe (mg/L) | **12.6** | 0.728 | 0.239 | | | **17.8** | |
| Mn (mg/L) | **0.92** | 0.110 | 0.04 | | | | |
| NH₄ (mg/L) | **176** | | 190.0 | | | **90.9** | |
| NO₂ (mg/L) | **4.75** | | 0.32 | | | **0.48** | |
| NO₃ (mg/L) | **23.9** | | 100.0 | | | **13.5** | |
| SO₄ (mg/L) | **139** | | | | | **239** | |
| Cl (mg/L) | **2670** | | 2970 | | | **313** | |
| COD (mg/L) | **3135** | 405 | 316 | 459 | 2244 | **5155** | 546 |
| Delta COD | | *-87.1* | *-89.9* | *-85.4* | *-28.4* | | *-89.4* |

| | | | | | | | |
|---|---|---|---|---|---|---|---|
| (*) double elution | | | | | | | |

From all the experimental data presented in Table 1 it appears that the treatment of the landfill leachate with activated charcoal is not a convincing and final solution. Indeed, a post-treatment is needed to bring further down the COD values within the law limits and to bring the colour of purified water to the common water-clear colour. In fact, the water recovered from the treatment with the activated charcoal, although clear, still presents an absorption tail at about 400 nm which gives a yellow hue.

### Examples 6-7 (comparative) and 8-10

If on one hand the treatment of the landfill leachate with activated charcoal has the limitations discussed above, also the treatment of the pure leachate with ozone has its limitations as illustrated in Example 6. If, for example, 100 ml of pristine landfill leachate are transferred in a flask of Duran glass and the flask is sealed and vacuum is applied with an aspirator and then an ozone/oxygen mixture is admitted into the flask and the flask is hand-shaken in order to allow the saturation of the aqueous phase with ozone, then the COD of the leachate is reduced by 28% with respect to the starting value (see Table 2) with a considerable ozone consumption of 0.9 KgO₃ per m³ of leachate. Furthermore, the originally brown colour lechate turns into yellow, a color that is not acceptable for the disposal, together with the residual COD value of 2253 mg/L against the 3135 mg/L of the pristine leachate.

Example 7 in Table 2 shows the consequences of the passage of the landfill leachate, already ozonized in Example 6, through a fixed bed of activated charcoal of the same type described in the examples 1-3 and 5. There is a considerable drop of the COD from 2253 mg/L to 270 mg/L, which represents a reduction of >90% of the initial COD value of the pristine leachate which was at 3135 mg/L with the complete discoloration of the aqueous phase which appears now water-clear. It is an excellent result, which combined with the iron content reduced from 12.6 mg/L to only 0.274 mg/L allows discharging the treated water in the public sewage within the limits imposed by the Italian legislation (Decreto Legislativo n. 152/06) which requires a maximum COD of 500 mg/L and an iron content of only 2 mg/L maximum. To reach such a result, it is necessary to consume 0.9 KgO₃ per m³. However, it is possible to achieve even better results than these by using the technique of photo-ozonolysis, i.e., the simultaneous action of UV radiation and ozone on the wastewater. Such technique is the object of the present patent and consists of the combined action of ozone and UV radiation on the landfill leachate wastewater previously treated with activated charcoal. Examples 8-10 show the invention in its preferred modes of realization. In practice, ozone is produced in the usual manner, electrochemically (cfr. F. Cataldo, Essay on the synthesis of ozone, Recent Res. & Develop. Electrochem. Vol.3, p.79, (2000), the wastewater to be treated, consisting, for example, in the landfill leachate previously passed through the activated charcoal, is put in a reactor in a volume of 200-250 ml and irradiated with an ultraviolet light emitted by a mercury vapor lamp. The reactor consists of a quartz flask in which the UV lamp is immersed. Two types of vapor mercury lamps were adopted: one at low pressure (called "Low P" and adopted in the Examples 8 and 10, Table 2) having a power of 17 W, and a high pressure mercury vapor lamp (called "High P" and adopted in the Example 9, Table 2) having a power of 125 W. The difference in the two UV lamps resides in the fact that the Low P emits all its 17 W as monochromatic light at 254 nm while the UV lamp Hi P emits in a wide spectrum of wavelengths, including the visible, so that only a fraction of its total power is emitted in the UV and is effective in photochemical processes.

The photo-ozonolysis process consists of bubbling ozone and oxygen (ozone 5% by mol over oxygen) in 200-250 ml of wastewater to be treated under continuous irradiation with ultraviolet light. In Table 2 the example 8-10 report in detail all the analytical parameters and experimental results of interest. Limiting our discussion to the COD (for the other parameters see Table 2), from the examples 8-10, it is possible to observe that in all cases the process adopted is able to reduce the COD by over 95% of the starting value. Such a result is not achievable neither with the exclusive use of activated charcoal nor with the exclusive treatment with ozone and neither by combining the sequence activated charcoal and ozone or vice versa. The only way to achieve excellent and unique results in terms of COD abatement involves the combined action of ozone and UV radiation on a landfill leachate pre-treated with activated charcoal. Indeed, the COD of the leachate of type 1 passes from the starting value of 3135 mg/L down to 61.8 mg/L in the case of Example 8, while the leachate of type 2 with a starting COD level of 5155 mg/L is reduced to 152 mg/L in Example 9 and to only 94 mg/L in Example 10. The Italian regulations (Decreto Legislativo N. 152/06) for the discharge of treated wastewaters in the public sewage requires a COD of 500 mg/L, while for the discharge into surface waters the COD limits are fixed at 160 mg/L and the COD limits for the discharge onto soil are fixed at 100 mg/L. Evidently, in the case of Example 8, we are inside all the regulations limits for the discharge of treated wastewater, while in the case of Examples 9 and 10 (which however are employing a leachate with a COD almost double as much as the one in Example 8), the treated waters are inside the limits for the discharge in the sewage and onto surface waters. Also Example 10 is inside the limits for the discharge in soil, but a higher consumption of ozone and a prolonged photo-ozonolysis was required to achieve such a result with respect to Examples 9 and 8.

**Table 2. Combined action of activated charcoal followed by photo-ozonolysis on landfill leachate (Examples 6-10)**

| | | Example 6 | Example 7 | Example 8 | | Example 9 | Example 10 |
|---|---|---|---|---|---|---|---|
| Experiment N° | Pristine Landfill Leachat e type 1 (139-37) | 143-37 A | 143-37 C | 147-37 | Pristine Landfill Leachate type 2 (157-37) | 158-37 | 159-37 |
| | | only O₃ | O₃+ Activate d Charcoal | Activated Charcoal +O₃+UV (low P) 6,5h | 157-37 | Activated Charcoal +O₃+UV (Hi P) 6h | Activated Charcoal +O₃+UV (Hi P) 8h |
| pH | **7.7** | | 7.8 | 8.7 | **8.5** | 8.5 | 8.6 |
| conductivity (microS/cm) | **7450** | | 9120 | 9800 | **9050** | 9300 | 9120 |
| Fe (mg/L) | **12.6** | | 0.274 | 0,181 | **17.8** | 0.274 | 0.220 |
| Mn (mg/L) | | | | | | | |
| NH₄ (mg/L) | **176** | | | 135 | **90.9** | 85.6 | 80.5 |
| NO₂ (mg/L) | **4.75** | | | 0,502 | **0.48** | 1.77 | 2.10 |
| NO₃ (mg/L) | **23.9** | | | 56.1 | **5.9** | 13.2 | 15.6 |
| SO₄ (mg/L) | **139** | | | 116 | **239** | 70.2 | 73.4 |
| Cl (mg/L) | **2670** | | | 2460 | **313** | 291 | 305 |
| COD (mg/L) | **3135** | 2253 | 270 | 61.8 | **5155** | 152 | 94 |
| Delta COD | | -*28.1* | -*91.4* | *-95.4* | | -*97.1* | -*98.2* |
| | | | | | | | |
| Ozone Consumption | | 0.90 Kg O₃/m³ | 0.90 Kg O₃/m³ | 0.20 Kg O₃/m³ | | 0.29 Kg O₃/m³ | 0.35 Kg O₃/m³ |

With the process of the present invention, the photo-ozonolysis of wastewaters in general and landfill leachate in particular, it is possible to produce a treated wastewater with all the parameters inside the Italian law limits for the discharge into the public sewage or in the surface waters. Furthermore, from these data a higher process efficiency results from the low pressure UV lamp (Low P) with respect to that working at high pressure. Indeed, ozone consumption appears limited to only 0.2 Kg per m³ of leachate, just as the result of the use of this type of lamp.

### Example 11

In a further embodiment of the process, the landfill leachate is first treated with ozone to reduce its initial COD, then it is passed through an activated charcoal bed and the eluate is submitted to the photo-ozonolysis process. In order to avoid a rapid saturation of the activity of the activated charcoal (which thus requires a thermal treatment for the reactivation), the landfill leachate is first submitted to ozonolysis. As shown in Example 3, such a treatment reduces the COD from 3135 mg/L to 2253 mg/L. The ozonized leachate, once passed through the activated charcoal, yields a treated wastewater with a residual COD of 270 mg/L. If this wastewater is photo-ozonolyzed for just 2 hours with an ozone consumption of 0.07 Kg per m³ of leachate, a final COD of 22 mg/L is reached, the best result in absolute among all the experiments described in the present patent application.

### Example 12

An example of a possible further improvement of the photo-ozonolysis efficiency, regards the combined use of the high intensity ultrasound. Such a process can be achieved by immersing the photo-ozonolysis reactor into an ultrasonic bath model Branson 1510. The photo-ozonolysis reactor is filled with 220 ml of landfill leachate of type 2 already treated with activated charcoal. A mixture of ozone and oxygen (5% mol ozone) is bubbled into the reactor through the wastewater and simultaneously the ultrasound and the UV irradiation are switched on. Using the low pressure UV lamp (Low P) and sonicating for 5 h the leachate of type 2 (pre-treated with activated charcoal) showed a residual COD of 76 mg/L against a starting value of 5155 mg/L. These results are even better than those shown in Table 2 for Example 10. The present invention has been described in its preferred embodiments on a laboratory scale; it is reasonable to think that an adequate engineering and scaling up of the process can yield further improvements in the efficiency of the COD abatement and it is reasonable to think that in all cases a COD value below 100 mg/L can be achieved, allowing the discharge of the treated water even into surface water and especially in dry soil, in observance of the law limits. It is also evident to the person skilled in the art that all the variants and improvements to the present invention will still be within its scope.

The invention is defined by the appended claims.

## Claims

1. Process for the treatment of landfill leachate wastewater comprising the following steps:
- treating the landfill leachate wastewater from the landfill and mixing them with active charcoal at room temperature, preferably passing the landfill leachate wastewater onto a fixed bed of activated charcoal:
- filtering the mixture to obtain an eluate;
- carrying out a photo-ozonolysis treatment on the eluate of the preceding step consisting in ozonolysis and simultaneous irradiation with UV light, said process being **characterized in that** the photo-ozonolysis is carried out in saturation conditions with ozone.

2. The process according to claim 1, wherein the landfill leachate wastewater is pre-treated with ozone only before going to the activated charcoal sorbent and then to the photo-ozonolysis process.

3. The process according to the claims 1-2, wherein the UV radiation is obtained by means of a mercury lamp selected from low, medium or high pressure mercury vapour lamps.

4. The process according to any of claims 1-3, wherein the ozone is bubbled with oxygen with an ozone quantity comprised in between 0.5% and 15% molar over the oxygen and, more preferably, in between 2% and 10% molar over the oxygen.

5. The process according to any of claims 1-4, carried out at room temperature and under a pressure going from 1 to 20 atm.

6. The process according to any of claims 1-5, wherein the photo-ozonolysis treatment is carried out for a timing that goes from 30 minutes to 8 hours.

7. The process according to any of claims 1-6 further assisted by the use of ultrasound, for example by means of the application of ultrasound transducers on the walls of the reactor itself or by immersing the reactor into an ultrasonic bath.

## Patentansprüche

1. Verfahren zur Behandlung von Deponiesickerwasser, umfassend die nachstehenden Schritte:
- Behandeln des Deponiesickerwassers aus der Deponie und Mischen desselben mit Aktivkohle bei Raumtemperatur, vorzugsweise Leiten des Deponiesickerwassers auf ein Festbett von Aktivkohle:
- Filtrieren des Gemisches, um ein Eluat zu erhalten;
- Ausführen einer Photo-Ozonolyse-Behandlung an dem Eluat von dem vorangehenden Schritt, bestehend in einer Ozonolyse und gleichzeitigen Bestrahlung mit UV-Licht, wobei das Verfahren **dadurch gekennzeichnet ist, dass** die Photo-Ozonolyse bei gesättigten Bedingungen mit Ozon ausgeführt wird.

2. Verfahren nach Anspruch 1, wobei das Deponiesickerwasser mit Ozon nur vorbehandelt wird, bevor es zu dem Aktivkohlesorbent und dann zu dem Photo-Ozonolyse-Verfahren gelangt.

3. Verfahren nach den Ansprüchen 1-2, wobei die UV-Strahlung mit Hilfe einer Quecksilberlampe, ausgewählt aus Nieder-, Mittel- oder Hoch-Druck-Quecksilberdampflampen, erhalten wird.

4. Verfahren nach einem der Ansprüche 1-3, wobei das Ozon mit Sauerstoff mit einer Ozonmenge zwischen 0,5% und 15 Mol-% gegenüber dem Sauerstoff und bevorzugter zwischen 2% und 10 Mol-% gegenüber dem Sauerstoff eingeleitet wird.

5. Verfahren nach einem der Ansprüche 1-4, ausgeführt bei Raumtemperatur und unter einem Druck von 1 bis 20 atm.

6. Verfahren nach einem der Ansprüche 1-5, wobei die Photo-Ozonolyse-Behandlung für eine Zeit von 30 Minuten bis 8 Stunden ausgeführt wird.

7. Verfahren nach einem der Ansprüche 1-6, weiter unterstützt durch die Verwendung von Ultraschall zum Beispiel mit Hilfe der Anwendung von Ultraschallwandlern an den Wänden des Reaktors selbst oder durch Eintauchen des Reaktors in ein Ultraschallbad.

## Revendications

1. Procédé pour le traitement d'eaux usées de lixiviat de décharge comprenant les étapes suivantes consistant à :
- traiter les eaux usées de lixiviat de décharge à partir de la décharge et les mélanger avec du charbon actif à la température ambiante, de préférence en faisant passer les eaux usées de lixiviat de décharge sur un lit fixe de charbon activé ;
- filtrer le mélange pour obtenir un éluat ;
- soumettre à un traitement de photo-ozonolyse l'éluat de l'étape précédente, consistant en une ozonolyse et en une exposition simultanée à de la lumière ultraviolette, ledit procédé étant **caractérisé en ce que** la photo-ozonolyse est mise en oeuvre dans des conditions de saturation avec de l'ozone.

2. Procédé selon la revendication 1, dans lequel les eaux usées de lixiviat de décharge sont prétraitées avec de l'ozone uniquement avant de les amener au sorbant de charbon activé et ensuite au procédé de photo-ozonolyse.

3. Procédé selon le revendication 1 ou 2, dans lequel l'exposition au rayonnement ultraviolet est obtenue au moyen d'une lampe au mercure choisie parmi des lampes à vapeur de mercure de basse pression, de pression moyenne ou de haute pression.

4. Procédé selon l'une quelconque des revendications 1 à 3, dans lequel on fait barboter l'ozone avec de l'oxygène, avec une quantité d'ozone comprise entre 0,5 % et 15 % molaire par-dessus l'oxygène, et de manière plus préférée entre 2 % et 10 % molaire par-dessus l'oxygène.

5. Procédé selon l'une quelconque des revendications 1 à 4, mis en oeuvre à la température ambiante et sous une pression se situant entre 1 et 20 atm.

6. Procédé selon l'une quelconque des revendications 1 à 5, dans lequel le traitement de photo-ozonolyse est mis en oeuvre pendant un laps de temps qui s'étend de 30 minutes à 8 heures.

7. Procédé selon l'une quelconque des revendications 1 à 6, facilité en outre par l'utilisation d'ultrasons, par exemple au moyen de l'application de transducteurs à ultrasons sur les parois du réacteur lui-même ou par immersion du réacteur dans un bain à ultrasons.
